Europäisches Patentamt

European Patent Office

Office européen des brevets

(11) Publication number: 0 319 124
A1

# EUROPEAN PATENT APPLICATION

(21) Application number: 88308429.5

(22) Date of filing: 13.09.88

(51) Int. Cl.⁴: G05D 9/04 , F16K 31/128 , F16K 31/34

The title of the invention has been amended (Guidelines for Examination in the EPO, A-III, 7.3).

(30) Priority: 23.09.87 GB 8722384

(43) Date of publication of application:
07.06.89 Bulletin 89/23

(84) Designated Contracting States:
AT BE CH DE ES FR GB GR IT LI LU NL SE

(71) Applicant: TORBECK CONTROL VALVES LIMITED
Unit 7, Tewin Court
Welwyn Garden City Hertfordshire AL7 1AU(GB)

(72) Inventor: Groombridge, Frederick Walter Henry
7 Oaklea Close
Welwyn Hertfordshire A16 0QL(GB)

(74) Representative: Spoor, Brian et al
c/o E.N. LEWIS & TAYLOR 144 New Walk
Leicester, LE1 7JA(GB)

(54) Servo-operated fluid flow control valve.

(57) A fluid flow control valve including a resilient diaphragm member (10) defining within the valve housing (8,12) a chamber (A) to which fluid is admitted through an orifice (28) from a fluid inlet (4). The diaphragm member (10) includes a closure plate (16) which is engageable with a valve seating surface (18) leading to a fluid outlet (6) to close the control valve. The orifice (28) is positioned outside the perimeter of the seating region of the closure plate (16) to permit outflow of fluid from the chamber (A) to the outlet (6) when the closure plate (16) is spaced from the valve seating surface (18). There is a control member (22) positioned within the chamber (A) to control the position of the closure plate (16). The relative position of the control member (22) to the closure plate (16) remains constant during regulating movements of the control member (22) while the closure plate (16) is out of sealing contact with the seating surface (18) of the outlet (6).

FIG.1.

## Improvements in or relating to servo-operated fluid flow control valves

The invention is concerned with improvements in or relating to servo-operated fluid flow control valves.

Servo-operated valves are well known in the control of fluid flow, and are particularly, but not exclusively, useful in the control of liquid under pressure, for example, mains water. In a typical example, a moveable diaphragm is provided within the valve body to form a sub-chamber, into which liquid is allowed to pass through a restricted orifice. The operation of the valve depends on whether the liquid is allowed to leave the chamber or to accumulate. Accordingly, the main liquid flow through the valve may be controlled, for example, as described in British Patent No. 1358683 which describes a cistern valve.

However, servo-operated valves of the so-called closed-loop type are capable of use in many applications and it is an object of the present invention to provide a reliable, efficient and versatile valve.

The present invention provides a fluid flow control valve comprising a valve body having a fluid inlet and a fluid outlet including a valve seating surface; a valve seat closure plate mounted for movement between a position in which a seating region thereof is in sealing contact with said valve seating surface and positions in which the seating region of the closure plate is spaced from the valve seating surface, said closure plate comprising a resilient diaphragm member extending between internal wall surfaces of the valve body to define a chamber therewithin to which there is an orifice to admit fluid to the chamber from the fluid inlet, characterised in that the orifice is positioned in the diaphragm member at a position outside the perimeter of the seating region of the closure plate, there is an aperture situated within the seating region of the closure plate to permit outflow of fluid from the chamber to the outlet and there is a control member positioned within the chamber for controlling the position of the closure plate with respect to the seating surface, said control member being capable of closing said aperture in the closure plate with when the valve is closed or "off", whereby, since the outflow of fluid from the chamber does not differ in volume from the inflow through the inlet, the relative position of the control member to the closure plate remains constant during regulating movements of the control member while the closure plate is out of sealing contact with the seating surface of the outlet.

In the use of a valve according to the invention, the movement of the control member within the chamber may be in a direction towards and away from the seating surface of the outlet and the closure plate follows the movement of the control member. Should the closure plate begin to move away from the control member, the fluid pressure in the chamber will fall slightly and the pressure of the fluid in the inlet will force the closure plate back towards the control member. Should the closure plate move nearer to the control member so that the aperture begins to be closed, the pressure of fluid in the chamber will rise and the closure plate will move away from the control member to re-open the aperture.

When it is desired to close the valve, the control member (and the closure plate) is moved in a direction towards the valve seating surface of the outlet. When the closure plate contacts the valve seating surface to close off the main flow through the valve, continued movement of the control member then closes the aperture in the closure plate to close off the fluid flow in the chamber.

Conveniently regulation of the control member is through a fluid-tight seal in a cap of the valve body, but any other convenient arrangement may be employed, such as via the outlet. This latter arrangement has the advantage that operation of the valve is as the low-pressure side of the valve.

There will now be described an example of two valves according to the invention. It will be understood that the description, which is to be read with reference to the drawings, is given by way of example only and not by way of limitation.

In the drawings:

Figure 1 shows a diagrammatical cross-sectional view through a first example in which the operation of the valve is from the high pressure side; and

Figure 2 is a similar view through a second example in which the operation of the valve is from the low-pressure side.

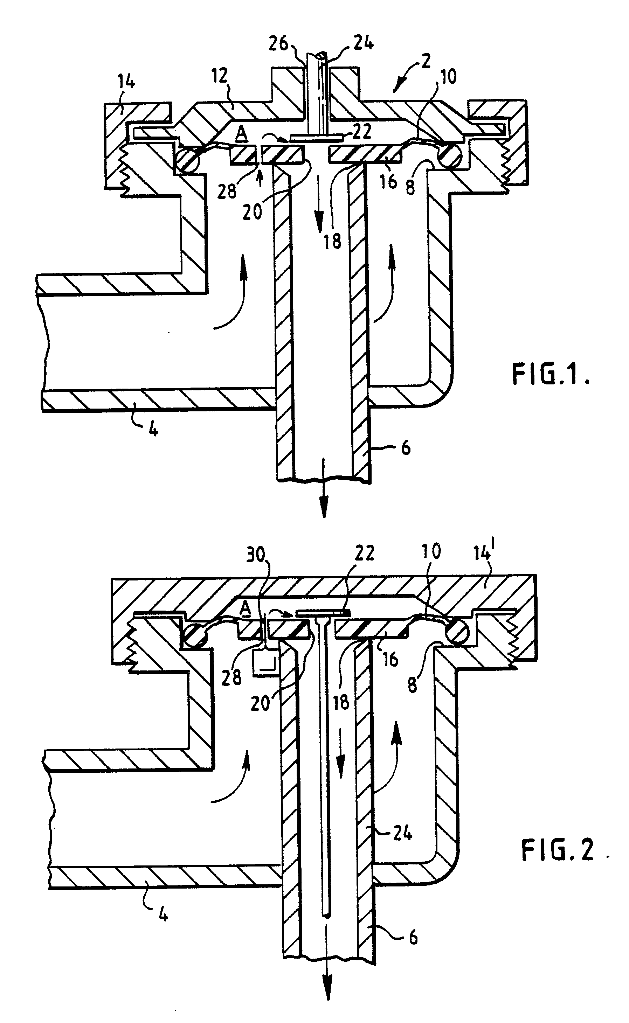

In Figure 1, the valve 2 operates on a water mains inlet 4 so as to control the flow from an outlet 6.

The valve comprises a valve body having an annular groove 8 receiving the margins of a diaphragm 10, secured in place by a cap member 12 and a surrounding locking ring 14. Centrally disposed in the diaphragm 10 is a moveable annular plate 16 capable of seating against lip portions 18 of the outlet 6.

The plate 16 is provided with a central aperture 20 which is capable of being closed by a head portion 22 of a control member 24, a stem portion of which passes in a water-tight manner through an orifice 26 in the cap member 12.

It will be observed that the diaphragm 10 and the plate 16, together with the cap 12 form a chamber A the inlet to which is provided by a small passage 28 in the plate 16 and having an outlet through the central aperture 20.

However the effective area of the outlet from the chamber A is determined by the distance between the head portion 22 of the control member 24 and this will remain substantially constant (except when the valve is closed) since no greater quantity of water may leave the chamber A than can enter it through the small passage 28. Thus the plate 16 is compelled to remain a predetermined distance from the head portion 22 in order to equate the flow through the chamber. Control over the flow through the outlet 6 is therefore obtained by the position of the plate 16 relative to the lip portions 18, and the position of the plate 16 is controlled by the position of the head portion as determined by the movement of the stem portion of the control member 24 in the orifice 26.

Thus, when the valve is fully opened, the head portion 22 and therefore the plate member 16 are in a raised position so that mains water flows past the underside of the plate member 16 and through the outlet 6. As the control member is lowered the water accumulated in chamber A, unable to leave in any increased quantity through aperture 20, ensures that the plate member 16 descends towards the lip portions 18 to commence reduction in the outflow. The outflow may be held at any desired rate by the positioning of the plate member as described.

At a given point in the descent of the plate member 16, it will contact the lip portion 18 as shown in the Figure, leaving open only the flow path in the chamber A, through the small passage 28 and through the aperture 20.

Continued downward movement of the control member 24 will therefore bring the head portion 22 into contact with the margins of the aperture 20 to close it. The valve is then fully closed.

When the valve is to be opened, slight raising of the control member will re-establish the outlet path from the chamber A until the effective area of this enables the outflow to reach equilibrium with the inflow through the passage 28. At that point the plate member 16 will commence to rise, thereby lifting off the lip portions 18 and re-establishing direct flow therepast.

Figure 2 shows a valve of similar kind illustrating the operation of the control member from the low pressure side of the valve. Like parts are given the reference numerals used in Figure 1, cap member 12 and locking ring 14 being formed as an integral locking cap 14′.

As before, the valve comprises a valve body having an annular groove 8 receiving the margins of a diaphragm 10, secured in place by the locking cap 14′. Centrally disposed in the diaphragm 10 is a moveable annular plate 16 capable of seating against lip portions 18 of the outlet 6.

The plate 16 is provided with a central aperture 20 which is capable of being closed by a head portion 22 of a control member 24, a stem portion of which passes through the outlet 6 and is operated through an orifice (not shown).

It will be observed that the diaphragm 10 and the plate 16, together with the cap 14′ form a chamber A the inlet to which is provided by a small passage 28 in the plate 16 and having an outlet through the central aperture 20.

It will be observed that the small passage 28 which acts as a bleed between the high inlet pressure and chamber A is provided in the second example with a needle member 30 which acts to adjust the flow through the passage as the plate 16 moves. Adjustment of the position of the needle in the passage may be used as a control of the pressure in chamber A by adjusting the balance of forces across the plate causing it to move relative to the lip portions 18 i.e. the seating of the valve

Control may therefore be exercised over either or both of the bleed passages. There are many ways in which this can be achieved, without introducing contacting surfaces which would be susceptible to wear and consequent eventual inaccuracy in use. For example, a mechanical linkage may be used which is part of a differential expansion device to control temperature. Alternatives include spring-operated control to govern flow or pressure or density, an aneroid capsule to control pressure or liquid level or level/density; a diaphragm could be used to provide a reference pressure or force or position. Other alternatives may include a flow valve linked to one or both bleed passages to control momentum of fluid through a valve according to the invention.

It will be understood that valves according to the invention may be utilised in a wide variety of applications. For instance, in the above examples, the control member 22 may be moved by a screw thread which may be manually operated in the manner of a tap or stop-cock. Alternatively, the control member may be movable along its longitudinal axis under the control of a thermostatic sensor device and may be used to regulate the supply of hot water for baths or showers. For example two valves as described above may be arranged to operate a hot water supply and a cold water supply respectively from a remote mixing arrangement to a hand-basin. The control members of the two valves may be limited to a temperature sensing device and may be regulated to produce a flow of water through one outlet at the basin, the position of the conventionally placed second outlet, for example the "cold tap", being replaced by an adjustable regulator to determine the required temperature.

There is of course, no requirement that the external regulating means shall be adjacent to the valve and a reliable remotely-controlled valve arrangement may be envisaged to operate any selected arrangement of valves according to the invention.

Valves according to the present invention may be used to control pressure, flow rate, density, temperature, molecular weight, vapour pressure, partial pressure or a combination of properties for example as hereinbefore mentioned, the final temperature of a mixture of hot and cold water. Other examples include operation as a pressure relief valve or for non-linear proportioning control of mixtures including gas mixtures, also so-called hybrid control such as control of fuel to an engine dependent upon required thrust or power or torque, or a combination of these.

Control of the required fluid property or properties may be achieved typically with a gain factor of between 10 and 1,000,000 between the preset feature, e.g. the control me-b r 22/plate 16, and the output feature e.g. the fluid flow. The arrangement according to the invention does not of itself apply limits to the gain factor.

Whatever application is selected, the present invention allows a neat compact arrangement to be used which will enhance the scope for design of for example domestic water fitments. In addition since the effort needed to operate the valve is minimal; in the examples described above in detail the force used to move the control member 16 is of the order of 1% of that handled by the diaphragm 10. Thus the valve may be adapted for use by handicapped persons, through a suitable lever arrangement or even by air pressure difference generated by blowing along a pipe connected to the valve cap orifice.

Various modifications may be made within the scope of the invention.

## Claims

1. A fluid flow control valve comprising a valve body (8,12) having a fluid inlet (4) and a fluid outlet (6) including a valve seating surface (18); a valve seat closure plate (16) mounted for movement between a position in which a seating region thereof is in sealing contact with said valve seating surface (18) and positions in which the seating region of the closure plate (16) is spaced from the valve seating surface (18), said closure plate (16) comprising a resilient diaphragm member (10) extending between internal wall surfaces of the valve body (8,12) to define a chamber (A) therewithin to which there is an orifice (28) to admit fluid to the chamber (A) from the fluid inlet (4), characterised in that the orifice (28) is positioned in the diaphragm member (10) at a position outside the perimeter of the seating region of the closure plate (16), there is an aperture (20) situated within the seating region of the closure plate (16) to permit outflow of fluid from the chamber (A) to the outlet (6) and there is a control member (22) positioned within the chamber (A) for controlling the position of the closure plate (16) with respect to the seating surface (18), said control member (22) being capable of closing said aperture (20) in the closure plate (16) when the valve is closed or "off", whereby, since the outflow of fluid from the chamber (A) does not differ in volume from the inflow through the inlet (4), the relative position of the control member (22) to the closure plate (16) remains constant during regulating movements of the control member (22) while the closure plate (16) is out of sealing contact with the seating surface (18) of the outlet (6).

2. A fluid flow control valve as claimed in claim 1 in which regulation of the control member (22) is arranged to be effected through a fluid-tight seal in a cap (12) of the valve body (Fig. 1).

3. A fluid flow control valve as claimed in claim 1 in which regulation of the control member (22) is arranged to be effected via the fluid outlet (4) (Fig. 2).

4. A fluid flow control valve as claimed in any preceding claim in which the orifice (28) is permanently open between the fluid inlet (4) and the chamber (A) and therefore has a fixed flow area.

5. A fluid flow control valve as claimed in any of claims 1 to 3 in which the orifice (28) has a variable flow area.

6. A fluid flow control valve as claimed in claim 5 in which the variable orifice (28) is controlled by movement of the closure plate (16) relatively to a fixed needle valve member (30).

7. A fluid flow control valve as claimed in claim 5 or 6 in which the flow area of the orifice (28) is controllable in response to an operational function or condition to which the control valve is responsive or which is to be controlled by the control valve.

8. A fluid flow control valve as claimed in any preceding claim in which the control member (22) is controllable in response to an operational function or condition to which the control valve is responsive or which is to be controlled by the control valve.

9. A fluid flow control valve as claimed in claim 8 in which means for controlling the control member (22) are postioned remotely from the control valve.

10. A fluid flow control valve as claimed in any preceding claim in which the fluid to be controlled is water.

FIG.1.

FIG.2.

## DOCUMENTS CONSIDERED TO BE RELEVANT

EP 88308429.5

| Category | Citation of document with indication, where appropriate, of relevant passages | Relevant to claim | CLASSIFICATION OF THE APPLICATION (Int. Cl.4) |
|---|---|---|---|
| D,A | GB - A - 1 358 683 (JONES)<br>* Fig. 1 and belonging text *<br>-- | 1,4-6 | G 05 D 9/04<br>F 16 K 31/128<br>F 16 K 31/34 |
| A | GB - A - 2 149 148 (PEGLERS LTD.)<br>* Fig. 1,2 and belonging text *<br>-- | 1,4 | |
| A | GB - A - 1 540 083 (HARRISON)<br>* Totality *<br>-- | 1 | |
| A | US - A - 4 299 248 (BECKER et al.)<br>* Fig. 3,4 and belonging text *<br>-- | 1 | |
| A | US - A - 4 453 563 (WALTERS)<br>* Totality *<br>-- | 1 | |
| A | GB - A - 1 532 210 (REED INTERN. LTD.)<br>* Totality *<br>---- | 1 | |

TECHNICAL FIELDS
SEARCHED (Int. Cl.4)

F 16 K 7/00

F 16 K 31/00

The present search report has been drawn up for all claims

| Place of search | Date of completion of the search | Examiner |
|---|---|---|
| VIENNA | 02-02-1989 | ROUSSARIAN |